# EUROPEAN PATENT SPECIFICATION

(11) **EP 1 111 575 B1**
(45) Date of publication and mention of the grant of the patent: **20.08.2008**
(21) Application number: 00122867.5
(22) Date of filing: 25.10.1995
(51) Int. Cl.: G09G 3/34, G09G 3/36

(54) **Brightness control and halftoning in optical display system**
Helligkeitssteuerung und Halbtonerzeugung in optischem Anzeigesystem
Commande de luminosité et obtention de demi-teintes dans un dispositif d'affichage optique

(30) Priority: 25.10.1994 US 328375; 22.02.1995 US 392055; 03.03.1995 US 398292; 23.07.1995 US 1972 P
(43) Date of publication of application: 27.06.2001
(62) Divisional of application: 95941333.7
(73) Proprietor: Fergason Patent Properties, LLC, Menlo Park CA 94025 (US)
(72) Inventor: Fergason, James L., Menlo Park, CA 94025 (US)
(74) Representative: Fennell, Gareth Charles

(56) References cited:
- EP-A- 0 730 371
- WO-A-93/15497
- WO-A-94/10675
- JP-A- 3 071 111
- JP-A- 3 125 333
- JP-A- 3 179 886
- JP-A- 3 288 885
- JP-A- 5 066 501
- JP-A- 5 080 717
- JP-A- 5 127 608
- JP-A- 5 188 345
- JP-A- 5 241 525
- JP-A- 6 102 484
- JP-A- 6 160 811
- JP-A- 6 161 383
- JP-A- 7 129 113
- JP-A- 60 125 891
- US-A- 5 122 791
- US-A- 5 153 756
- US-A- 5 359 345

## Description

### CROSS REFERENCE TO RELATED PATENTS AND PATENT APPLICATIONS

Reference is made to commonly owned co-pending U.S. patent applications Serial No. 08/187,162, 08/187,050, and 09/187,163, filed January 25, 1994 (now, respectively, U.S. Patents Nos. 5,541,745 issued July 30,1996, 5,532,854 issued July 2,1996, and 5,717,422 issued February 10, 1998); Serial No. 08/275,907, filed July 5, 1994 (now U.S. Patent No. 5,519,524 issued May 21,1996); Serial No. 08/328,375, filed October 25, 1994 (now U.S. Patent No. 5,537,236 issued July 16, 1996); Serial No. 08/392.055, filed February 22, 1995 (now U.S. Patent No. 5,572,341 issued November 5,1996); Serial No. 08/398,292, filed March 3, 1995 (now U.S. Patent No. 5,715,029 issued February 3,1998); Serial No. 08/295,383, filed August 24, 1994 (now U.S. Patent No. 5,621,572 issued April 15.1997); Serial No. 08/328,371, filed October 25, 1994 (now U.S. Patent No. 5,858,599 issued September 15, 1998); Senal No. 08/383,466, filed February 3, 1995 (now U.S. Patent No. 5,606,458 issued February 5, 1997); and provisional patent applications Serial No. 60/002,780 entitled Optical system and method for a head mounted display providing both front and peripheral fields of view and Serial No. 60/002,779 entitled Monocular viewing device with retroreflector display system, telecommunication system, and method, both filed July 19 1995. The disclosures thereof may be of interest to the skilled reader.

### TECHNICAL FIELD

The present Invention relates to the enhancing of optical displays and methods to enhance such displays, and, more particularly, to enhancing optical displays and methods by coordinating the back light with the dynamic operation of the displayed image developing device.

### BACKGROUND

The present invention may be used with various types of displays and systems. Exemplary displays are a liquid crystal display (sometimes referred to herein as "LCD"), especially those which modulate light transmitted therethrough, reflective liquid crystal displays, and so on.

Conventional optical displays typically display graphic visual information, such as computer generated graphics, and pictures generated from video signals, such as from a VCR, from a broadcast television signal, etc.; the pictures may be static or still or they may be moving pictures, as in a movie or in a cartoon, for example. Conventional displays also may present visual information of the alphanumeric type, such as numbers, letters, words, and/or other symbols (whether in the English language or in another language). Visual information viewed by a person (or by a machine or detector) usually is in the form of visible light. Such visible light is referred to a light signal or an optical signal. The term optical signal with which the invention may be used includes visible light, infrared light, and ultraviolet light, the latter two sometimes being referred to as electromagnetic radiation rather than light. The optical signal may be in the form of a single light ray, a light beam made up of a plurality of light rays, a light signal such as a logic one or a logic zero signal used in an optical computer, for example, or the above-mentioned alphanumeric or graphics type display. Thus, as the invention is described herein, it is useful with optical signals of various types used for various purposes. Therefore, in the present invention reference to optical signal, light ray, light beam, light signal, visual information, etc., may be used generally equivalently and interchangeably.

In an exemplary liquid crystal display sometimes referred to as an image source, there usually are a plurality of picture elements, sometimes referred to as pixels or pels, and these pixels can be selectively operated to produce a visual output in the form of a picture, alphanumeric information, etc. Various techniques are used to provide signals to the pixels. One technique is to use a common electrode on one plate of a liquid crystal cell which forms the display and an active matrix electrode array, such as that formed by thin film transistors (TFT), on the other plate of the liquid crystal cell. Various techniques are used to provide electrical signals to the TFT array to cause a particular type of optical output from respective pixels. Another technique to provide signals to the pixels is to use two arrays of crossed electrodes on respective substrates of an LCD; by applying or not applying a voltage or electric field between a pair of crossed electrodes, a particular optical output can be obtained.

The displaying of a dark scene using a display device (sometimes referred to as a passive display), which modulates light received from a separate light source, encounters a disadvantage which ordinarily is not present for displays which produce their own light, such as a cathode ray tube (CRT). The problem has to do with reduced resolution and/or contrast of the displayed image.

In a CRT, for example, when it is desired to display a dark scene, the intensity of the output light can be reduced. The different parts of the dark scene, then, all may be output at the reduced brightness or illuminance level. All pixels (e.g., picture elements, phosphor dots in a monochrome display or group of three red, green and blue phosphor dots for a multicolor display, etc.) of the CRT can be active so that resolution is maintained even though intensity of the light produced by the phosphors is reduced.

However, in a passive display device, such as a liquid crystal display, an electrochromic display, etc., whether of the light transmitting type or of the light reflecting type, the usual practice to reduce brightness of a displayed image or scene is to reduce the number of pixels which are transmitting light at a particular moment. Such a reduction reduces the resolution of the display. Also, such a reduction can reduce the contrast of the display.

The human eye has difficulty distinguishing between seeing or recognizing the difference between low and high brightness and contrast ranges. This difficulty is increased when the number of pixels is decreased and resolution is degraded.

It would be desirable to improve the contrast and resolution of passive displays.

In U.S. patent application Serial No. 08/187,163 (now U.S. Patent No. 5,717,422) is disclosed a passive apparatus, such as an LCD, and method for displaying images with high contrast by controlling the light input to the display to control brightness of the output while operating respective pixels of the display to obtain good contrast substantially without regard to the output brightness. Different color effects also are disclosed using, for example, field sequential switching of respective color light. However, this is another example of a passive optical device, in this case an LCD, in which field sequential switching could be improved if coordinated with the delays inherent in the dynamic optical response of a liquid crystal cell, for example, relative to the changes in operating signal, such as electric field, voltage, etc.

As is described in U.S. patent application Serial No. 08/187,163 (now U.S. Patent No. 5,717,422), an image of a candlelit room would be dim. In the prior art devices a relatively small number of pixels would be used, then, to transmit light to create the image, whereas a relatively large number of pixels would be used to block light transmission to give the effect of the reduced intensity or dim room. In the invention of such application, though, the number of pixels used to create the image remains constant, and the contrast ratio between one portion and another portion of the image remain constant; only the intensity of the illuminating light changes thereby to diminish the brightness of the room. Therefore, with the invention image data is not lost regardless of the brightness of the image, whereas in the prior art image data is lost because the additional pixels are used to brighten or darken the brightness of the image.

The features of the invention as described in that patent application can be used in a frame sequential basis. The features of the invention can be used regardless of whether the display is operated in reflective mode or in transmissive mode. Also, the features of the invention can be used in a virtual reality type display in order to provide a very wide range of contrast and of image brightness characteristics. The picture information is used to derive the brightness of the display, not the surrounding ambient. Using the invention of that application, the amount of information that can be conveyed by the display is substantially increased over the prior art.

For example, if there were a grey scale of 100 shades of grey and a display with 10 shades of grey, the intensity of the illuminating source can be changed at 10 different levels, for example, and there also can be 10 different shades of grey provided by the display itself. Therefore, this provides 100 shades of grey. This characteristic can be increased by another factor of 10 by going to r, g, b (red, green, blue) modulation on a field sequential basis, which allows the possibility of 10 to the 6th different illumination levels and colors. The foregoing is especially important in head mounted displays where immersion in the image is extremely important. Using features of such patent application, there can be high illumination of the scene, then, the grey scale contrast ratio of the real image can be adjusted. As a result, there is a high contrast image presented in a bright motif. Another example using such invention is the ability to display a sunrise in which the red image is enhanced and the blue and green are minimized.

The invention of that application, then, can separate the two functions of brightness and image. The image is a function of the operation of the liquid crystal modulator and the illumination brightness is the function of the light source intensity. The r, g, b colors can be changed to give a candlelight or moonlight effect with good resolution and color function, but the brightness of the scene is a function of the background. As a result, it is possible to photograph the scene in daylight to get good contrast; and then by reducing the display illumination it is possible to give the impression of a moonlit or candlelit environment.

US-A-5122791 discloses a display device formed by a matrix of surface-stabilized bi-stable ferroelectric liquid crystal elements each being separately settable by a matrix driver.

WO 94/10675 discloses a display system including an are lamp effective to direct light onto a number of spatial light modulator devices.

US-A-5359345 discloses a color display with an address selectable liquid crystal pixel.

EP0730371 (MOTAMURA, Kensuke et al) relates to a liquid crystal display apparatus comprising an amplitude detecting unit for detecting an amplitude of a supplied video signal; a liquid crystal display for displaying an image on a main surface based on the video signal; a backlight for giving off light with a luminance which can be freely set from the back surface of the liquid crystal display to the main surface; and a luminance setting unit for variably setting the luminance of the backlight based on the amplitude detected by the amplitude detecting unit. EP0730371 falls within the state of the art by reason of Article 54(3) EPC.

JP 07-129113 (NOMIYA, Kazumi) relates to a device for maintaining and adjusting a certain display luminance at a constant level by computing the overall luminance of the display screen based on the number of white pixels in an image displayed on the display screen.

JP 03-179886 (MURAKAMI, Masabaru) relates to a projection type liquid crystal display device displaying a picture of white characters by controlling the lamp luminous quantity according to an average picture level (APL) so as to increase the brightness of a white level peak within a picture with a low APL without reducing the efficiency of a light in a liquid crystal light bulb and attempting to improve the contrast.

JP 03-288885 (MORISHITA, Jo) relates to saving power consumption by varying voltage supply to a backlight in accordance with the detected brightness of a surrounding environment.

### SUMMARY

According to a first aspect of the present invention there is provided a method of controlling contrast of a display image of a display apparatus capable of displaying color within a predetermined grey range having a predetermined number of discrete shades of grey, the display apparatus including an illuminating light source and a computer control, the method comprising; processing brightness information and color information of the input image signal; wherein if an input image signal uses a first number of discrete shades of grey that is less than the predetermined number of discrete shades of grey of the display apparatus in a range less than the predetermined grey range, and then the first number of discrete shades of grey is changed to a second number of discrete shades of grey greater than the first number of discrete shades of grey while adjusting the amount of light from the illuminating light source, wherein the adjusting comprises: decreasing the amount of light if the image corresponding to the input signal is a dim image; and increasing the amount of light if the image corresponding to the input signal is a bright image.

According to a second aspect of the present invention there is provided a display device for displaying an image, comprising: a display apparatus capable of displaying color within a predetermined grey range having a predetermined number of discrete shades of grey; an illuminating light source; a computer control, wherein the computer control is operable to receive an input signal including brightness and color information using a first number of discrete shades of grey that is less than the predetermined number of discrete shades of grey of the display apparatus in a range that is less than the predetermined grey range; change the first number of discrete shades of grey to a second number of discrete shades of grey used to display an image on the display while adjusting an amount of light from the illuminating light source by increasing an amount of light from the illuminating light source if the brightness is high and decreasing an amount of light from the illuminating light source if the brightness is low.

As is described further below, the invention is useful to coordinate light output by an optical device, such as an LCD, for example, and the dynamic operation of such optical device with another optical device, such as one that switches or shifts the location of the output light for use, such as viewing, projection, etc., one that displays images in field (sometimes referred to as frame or part of a frame) sequential operation to present images with good contrast and/or color effect that are independent of the brightness of the output light, and so on.

One or more of these other objects, features and advantages of the present invention are accomplished using the invention described and claimed below.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed.

Although the invention is shown and described with respect to certain preferred embodiments, it is obvious that equivalents and modifications will occur to others skilled in the art upon the reading and understanding of the specification. The present invention includes all such equivalents and modifications, and is limited only by the scope of the claims.

### Brief Description of the Drawings

In the annexed drawings:
Fig. 1 is a schematic illustration of a display system in accordance with an embodiment of the invention including a head mounted portion;
Fig. 2 is a schematic section elevation view showing the various operational parts of the monocular viewing device used in the display system of Fig. 1;
Fig. 3 is a schematic illustration of a display optical system used in the viewing device of Figs. 19-20, for example, and/or in other viewing devices or display systems disclosed herein;
Fig. 4 is a schematic illustration of a light transmissive display system according to an embodiment of the invention;
Fig. 5 is a schematic illustration of a light reflective display system according to an embodiment of the invention;
Fig. 6 is a schematic view of a reflective field sequential display and illumination system using plural cholesteric liquid crystal reflectors and plural light sources of respective colors to provide a multicolor or full color display useful in various embodiments of the invention;
Fig. 7 is a schematic view of a head mounted display system including a pair of display subsystems in accordance with various embodiments of the invention; and
Figs. 8-13 are schematic graphical illustrations depicting operation of the invention.

### DESCRIPTION

Reference is now made in detail to the drawings wherein like reference numerals designate like parts in the several figures.

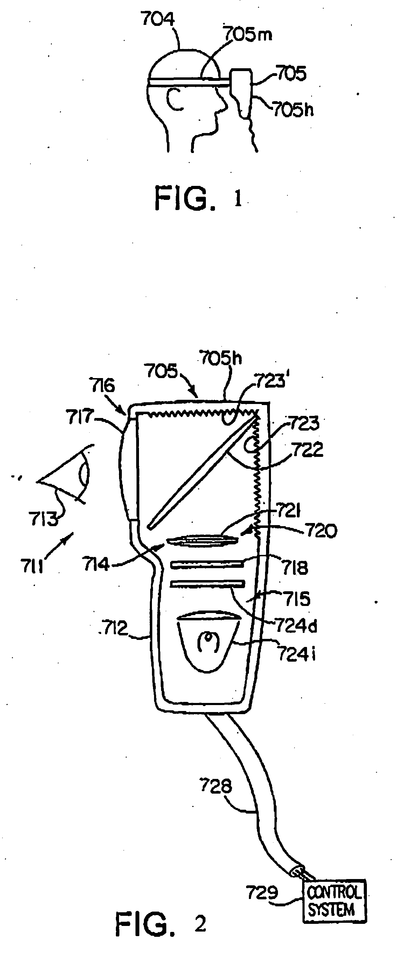

Referring to Fig. 1, a person 704 is shown wearing a head mounted viewing system 705 in accordance with the present invention. The viewing system may be part of a virtual reality viewing system having one or more displays which are viewed by the person. The viewing system may be part of a telecommunications system, entertainment system, or some other device in which light, optical, etc. information can be presented for viewing, projecting, photographing, or other use. Exemplary systems in which the invention may be used are disclosed in the above-mentioned patent applications; of course there may be other uses, too.

The head mounted viewing system 705 includes a housing 705h in which the various components of the viewing system 705 are included, and a mounting device 705m, such as a strap, eyeglass or goggles type frame support structure, etc. The mounting device 705m mounts the housing 705h for support from the head of the individual 704 placing the viewing system 705 in position in front of one of the eyes for viewing of an image presented by the viewing system 705. Whether the viewing system 705 is hand held, head mounted, or otherwise supported, for example, from a pedestal, tripod, frame, etc., from a table, from the floor, from a console 9. etc., preferably the viewing system 705 and housing 705h thereof is relatively small and sufficiently lightweight to facilitate moving, transporting, mounting, and/or holding. If the viewing system 70S is to be hand held or head mounted, it especially should be relatively lightweight to avoid being a weight burden on the hand or head of the individual using the viewing system 705. Also, to facilitate holding the viewing system 705 manually or head mounting the viewing system, the viewing system 705 should be relatively small. An exemplary viewing system may be, for example, approximately 4 to 5 inches in height, approximately Z to 3 inches wide, and approximately 1 ½ to 2 inches deep. These are exemplary only, and it will be appreciated that other dimensions may be used.

In using the viewing system 705 it may be head mounted, hand held, coupled to a control box, console or the like, for example, similar to the main body of the conventional telephone when used in a telecommunication system.

Turning to Fig. 2, the viewing system 705 is shown in detail as a monocular viewing system. The housing 705h includes a viewing portion 711 and a support portion 712. The viewing portion 711 is intended to be viewed by an eye 713 of a person 704 (Fig. 42), and the support portion 712 is intended to be held in the hand of that individual. As was mentioned above, a head mount 705m may be provided to support the viewing system 705 from the head of a person. Thus, the housing 705h may be hand held, supported by a strap, cap, temple piece as in eyeglasses, or otherwise mounted for viewing by a person.

The viewing system 705 includes an optical system 714 in the housing 705h. The optical system 714 includes an image source 715, such as an LCD, that provides images for viewing by the eye 713 through a viewing port 716. A viewing lens 717 (or group of lens) presents to the eye 713 an image which appears at a comfortable viewing distance, such as about 20 inches or more away. An image resolution enhancing device 718 (sometimes referred to as an optical line doubler or OLD, dithering device or system, EDS, etc.) optionally included in the optical system 714 may be used to enhance the resolution or other qualities of the image produced by the image source 715.

A number of optical components 720 are included in the optical system 714. The optical components include focusing optics 721 (sometimes referred to simply as "lens" ; or as projection optics or as a projector), a beam splitter 722, and one or more retroreflectors 723, 723'.

The image source 715 includes a display 724d and a source of incident light 724i. The light source illuminates the display 724d, and the display in turn presents images which can be projected for viewing by the eye 713, as will be described in greater detail below. It will be appreciated that other types of image sources may be used, examples being cathode ray tube displays, other liquid crystal displays, plasma displays, etc. Examples of several displays and light sources are presented in the above-referenced co-pending patent applications. A connection cable 728 provides electrical and/or optical signals and/or power to the optical system 714, and is particular to the image source 715 and OLD 718 to develop the above-mentioned images for viewing by the eye 713. A control system 729 is coupled to the cable to provide such electrical signals for controlling operation of the display system 705, as is described in further detail below.

Summarizing such controlled operation, though, the display 724d may be a twisted nematic liquid crystal display, and the OLD 718 includes an optical switch, such as a surface mode liquid crystal cell, that switches polarization characteristics of light to cause the light output to viewed by the eye 713 to be, for example, of enhanced resolution, as is described further below. Therefore, the control system 729 provides signals to generate the image by the display 724d: and the control system 729 also controls the optical switch to effect a synchronization such that there is a phase or time delay between the signals to the twisted nematic LCD and the signals to the optical Switch. Accordingly, the optical switch which operates at a different speed, *e.g.,* faster or in shorter time than the twisted nematic LCD will be coordinated with the operation of the twisted nematic LCD to improve operation and optical output of the display system 705.

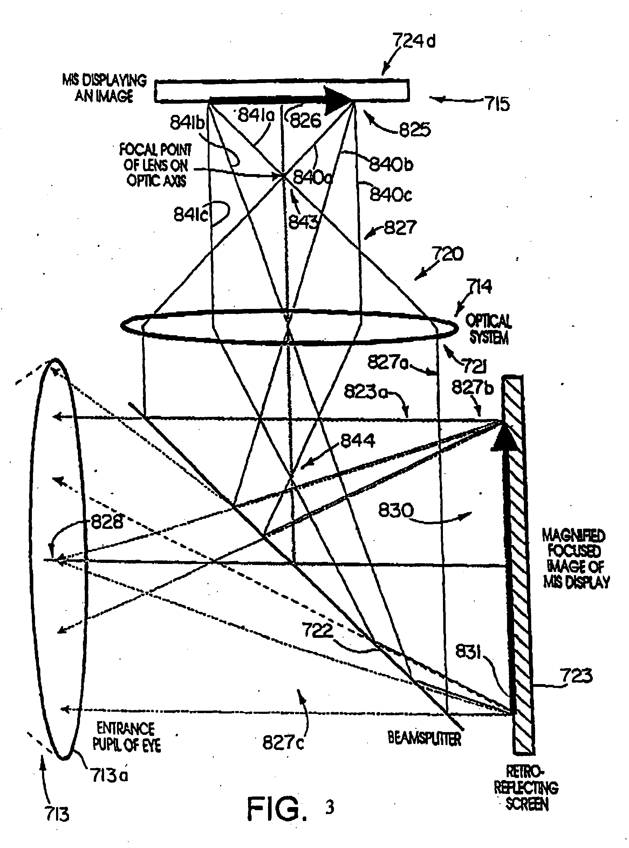

In Fig. 3 details of optical components of the optical system 714 of the display system 705 are shown. The optical components shown in Fig. 3 are similar to those included in the housing 705h of Fig. 2; however, in Fig. 3 the housing 705h and support 705m are not shown to facilitate illustrating the invention and to simplify the drawing.

The optical components 720 of the optical system 714 include focusing optics 721 (sometimes referred to simply as "lens" or as projection optics or as a projector), a beamsplitter 722 and retro-reflector 723. The display system 705 also may include an image source 715 (Fig. 2) which provides images or light having characteristics of an image and, if desired, may be part of the mentioned projector. An exemplary image source is a liquid crystal display, such as a small liquid crystal television having a cross-sectional display area on the order of about one square inch or less. As shown, the image source 715 includes a liquid crystal display 724d which modulates light from the light source 724i to form images for viewing by the eye 713. Alternatively, the image source may be separate and simply used to provide one or more images or light having image characteristics that can be provided by the viewing system 705,
or a head mounted display, sometimes referred to as HMD to the eye 713, Additional optical components of the optical system 714 may include linear polarizers, circular polarizers, wave plates, focusing elements, such as lenses or mirrors, prisms, filters, shutters, apertures, diaphragms, and/or other components that may be used to provide a particular type of output image for viewing by the eye 713. Examples of several embodiments using such additional optical components are described below with respect to other drawing figures.

The invention is useful with virtually any type of image source or display source. An example of such a display source is a compact flat panel display, and especially one utilizing a reflective liquid crystal display made from a single crystal silicon active matrix array.

In Fig. 3 the image source 715 displays an image 825, which is shown in the drawing as an arrow 826. The light 827 leaving the image source 724 represents an image or has characteristics of an image, and that light is collected by the focusing optic 721 of the optical system 714 of the display system 705 and travels to the beamsplitter 722. In Fig. 3 and in a number of the other drawing figures hereof the focusing optics 721 is represented as a single lens. However, it will be appreciated that the focusing optics 721 may include one or more other components, such as lenses, reflectors, filters, polarizers, wave plates, *etc.*

Although the image source(s) 715 is shown in Fig. 3 located relatively above the beamsplitter 722, the image source may alternatively be located below the beamsplitter.

At least some of the light 827a incident on the beamsplitter 722 is reflected by the beamsplitter as light 827b toward the retro-reflector 723. The retro-reflector may be, for example, a screen made of retro-reflecting material. Exemplary retro-reflectors are well known. One example is that known as a corner reflector or a sheet having a plurality of corner reflectors. Another example is a material having plural glass beads or other refracting and/or reflecting devices on or in a support. An example of a retro-reflector is a film or sheet material having a plurality of corner cubes which material is sold by Reflexite Corporation of New Britain, Connecticut. Such material is available having about forty-seven thousand corner reflectors per square inch.

The light (light rays) 827c, which are shown as broken lines, are reflected by the retro-reflector 723 soch that their path is exactly back along their direction of incidence on the retro-reflector. In this way some of the light rays 827c pass through the beamsplitter 722 and are directed toward a location in space designated 828 in the illustration of Fig. 3. The eye 713 of a viewer (person) can be placed approximately at location 828 to see the image, and the pupil and lens, individually and collectively designated 713a, of the eye, accordingly, are shown at that point. The lens 713a focuses the light incident thereon as an image on the retina of the eye 713.

The projection lens 720 projects light toward the retro-reflector 723 to cause a real image to be formed at the retro-reflector or in front or behind the retro-reflector. As is defined in Jenkins & White, Fundamentals Of Optics, McGraw-Hill, 1976, for example, using an exemplary projection lens, an image is real if it can be visible on a screen. The rays of light are actually brought to a focus in the plane of the image. A real image is formed when an object is placed beyond the focal plane of a leas; the real image is formed at the opposite side of the lens. If the object is moved closer to the focal plane of the lens, the image moves farther and is enlarged. In contrast, a virtual image occurs if and object is between the focal point of a lens and the lens itself.

In Fig. 3 the broken lines represent light rays which travel after reflection by the retro-reflector along the same or substantially the same path, but in the opposite direction to, respective incident light rays impinging on the retro-reflector. Thus, the retro-reflector 723 is part of a conjugate optics path 823a in which light incident thereon is reflected in the same path and opposite direction as reflected light. The beamsplitter 722 directs light from the focusing optics 721 into that conjugate optics path and toward the retro-reflector; and the beamsplitter also passes light in the conjugate optics path from the retro-reflector to the output port for viewing by the eye 713. The beamsplitter 722 and retro-reflector 723 cooperate as a conjugate optics system to provide that conjugate optics path.

Using the described conjugate optics path and system, relatively minimal amount of the light from the image source 724 and focusing optics 721 is lost and, conversely, relatively maximum amount of light is directed to the eye 713. Also, there is substantial accuracy of image and image resolution conveyed to the eye. Furthermore, especially if a relatively good quality retro-reflector is used so that the precise location at which the image 830 is in focus will not be critical, *e.g.,* it can be behind or in front of the retro-reflector, the tolerance required for the relative positioning of the components of the optical system 714 is less severe. This makes the HMD display system 705 relatively robust and reliable.

In Fig. 3 the viewed image 830 is represented by an enlarged arrow 831. Such arrow 831 is shown in Fig. 3 as a magnified focused image of the image 825 from the image source 724. The image 830 may be in focus at or approximately at the retro-reflector 723, and this is especially desirable for good quality images to be provided the eye 713 when a relatively low quality retro-reflector is used. A low quality retro-reflector is one which has relatively low resolution or accuracy of reflecting light in a conjugate manner in the same path but opposite direction relative to the incident light. With a low or poor quality retio-reflector and the image not being focused at the retro-reflector, it is possible that too much light may be lost from the desired conjugate optics path back to the eye 713, and this can reduce the quality of the image seen. However, the image 830 may be in focus at another location or plane either behind the retro-reflector (relative to the eye) or in front of the retro-reflector, and this is easier to do white maintaining a good quality image for viewing when the retro-reflector is a good quality one. The better the retro-reflector, the more self-conjugating is the optical system 714 and the less the need to focus with precision at the retro-reflector.

Retro-reflector quality may be indicated by the radians of beam spread of light reflected. For example, a relatively good quality retro-reflector may have from zero or about zero radians of beam spread to a few milliradians of beam spread. The quality usually is considered as decreasing in proportion to increasing beam spread of reflected light.

In considering the brightness of the image seen by the viewer, the nature of the beamsplitter 722 plays a role. The light produced by the image source 724 may be polarized or unpolarized. If the beamsplitter 722 is of a noc-polarizing type, then a balanced situation is to have 50% of the light incident on the beamsplitter 722 be reflected and 50% transmitted. Thus, of the light 827a incident on the beamsplitter 722, 50% is reflected and sent toward the retro-reflector screen 723 as light 827b. Of the reflected light 827c from the retro-reflector 723, 50% of the light will be transmitted through the beamsplitter 722 and will travel to the viewer's eye 713. This configuration of the optical components 720 of the display system 705 can transfer to the viewer's eye a maximum of 25% of the light produced by the image source 724. If desired, the beamsplitter 722 can be modified in ways that are well known to change the ratio of the reflected light to transmitted light thereby. Also, the beamsplitter 722 may include an anti-reflection coating so that all or an increased amount of the image comes from one side of the beamsplitter and thus to reduce the likelihood of a double image.

Since the optical system 714 of the display system 705 provides good resolution of the image and maintains the characteristics thereof, the image source can be a relatively inexpensive one that does not have to compensate for substantial loss of image quality that may occur in prior display systems. Furthermore, since a relatively large amount of the light provided by the image source 724 is provided to the eye 713 for viewing, *e.g.,* since the retro-reflector can virtually focus the light for viewing at the eye, additional brightness compensation for loss of light, as may be needed in prior display systems, especially portable, *e.g.,* hand held or head mounted, ordinarily would not be required.

For exemplary purposes, in Fag.3 three light rays 840a, 840b, 840c (collectively 840) originating at the tip of the arrow 826 constitute a portion of the light 827. Three light rays schematically shown at 841a, 841b, 841c (collectively 841) also are examples of light emanating at the tail of the arrow 826. The light 827 has characteristics of the image 825 from or provided by or at the image source 715, and represented by the exemplary light rays 840 and 841, is focused by the focusing optics 721 onto the retro-reflector 723. The size of the image 830 seen as the arrow 831 on the retro-reflactor 723 depends on the focal length of the focusing optics 721 and the distances between the image source 724 and the retro-reflector 723 from the focal points 843, 844 of the focusing optics 721. Thus, magnification can depend on such focal length. The image source 715 should be located relative to the focusing optics 721 such that an image can be focused, at or approximately at the retro-reflector. For example, the image source 715 may be beyond the focal point 843 of the focusing optics 721, and the retro-reflector likewise preferably is beyond the focal point 844 of the focusing optics so that the image can be focused at the retro-reflector.

In the illustration of Fig 3 the image 830 on the retro-reflector 723 is magnified relative to the size of the image at the image source display 724d; it does not have to be magnified. The image 830 may be the same size as the image 825 or it may be smaller. Thus, although the image source display 724d may be relatively small and/or may provide a relatively small size image 825 at its output, the size of the image 830 viewed by the eye 713 may be different.

The optical system 714 is operable to place the image plane effectively at the retina of the viewer's eye 713. This is accomplished by effectively putting the plane of the eye lens (or pupil) 713a effectively at the position occupied by the focusing optics 721 relative to the source of the Image provided to the focusing optics. In a sense the lens 721 is optically superimposed on the lens 713a of the eye 713.

The invention provides an optical system in which there are conjugate paths from a lens, such as focusing optics 714, which corresponds to the "lens means" of an optical sensor, *e.g..* the eye 713. Stated in another way, the invention presents visual information or optical data with a wide field of view by taking the output from a lens (focusing optics 721) and reflecting the light back along a Conjugate path toward a location corresponding to that of the same lens which was in the original path, but actually direct that reflected light onto the eye placed at such corresponding location. This is obtained by using the conjugate optics arrangement disclosed herein.

The human eye is most comfortable when viewing an image at a distance of about twenty inches, approximately at the distance at which one would place a book, document, *etc* to be read. It is desirable that the final image as seen by the viewer be located at such distance. *e.g.,* approximately twenty inches from the pupil 713a of the eye. This can be accomplished in the manner, if desired, by adding an additional lens 717 (Fig.2) or other optical system (not shown) between the beamsplitter 722 and the eye 713. Such leas may cause the person to see a virtual image behind the retro-reflector, as is described in several of the above patent applications. Although in many viewing devices further spacing between the eye and the optical component of the optical system nearest the eye may be desired to obtain desired eye relief, the use of the law 717 at the indicated distance of about ½ to 1 inch from the eye usually is acceptable and reasonably comfortable because that is the approximate spacing of ordinary eye glasses to which people ordinarily relatively easily become accustomed.

The function of the lens 717 may be obtained by using a negative lens at the focusing optics 721.

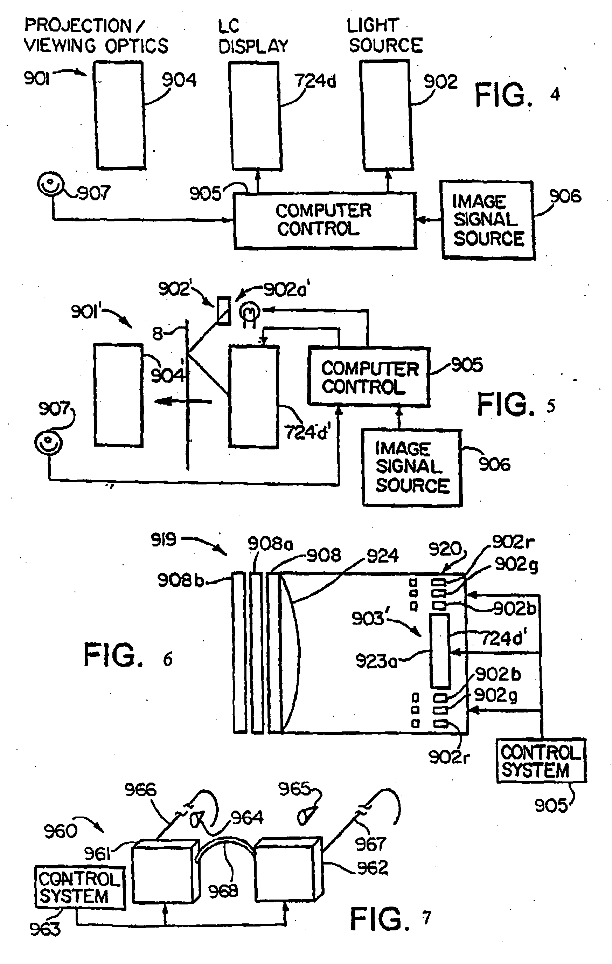

Referring to Fig. 4, a light transmissive display system according to an embodiment of the invention is illustrated at 901. The display system 901 includes a light source 902, liquid crystal display 903, such as that shown at 724d in Fig. 2, optics 904, such as that shown at 714 in Fig, 2, for projection or viewing of the images created by the liquid crystal display, a computer control 905, such as the control 729 in Fig. 2, and an image signal source 906, which may be part of the control 905 or a separate source of video signals or other signals as may be appropriate. A photodetector 907 also may be included in the system 901.

The light source 902 may be one or more light emitting diodes, incandescent light source, fluorescent light source, light received via fiber optics or other means, a metal halide lamp, etc.

The liquid crystal display 903 may be a twisted nematic liquid crystal cell, a variable birefringence liquid crystal cell, a supertwist liquid crystal cell, or some other type or liquid crystal cell able to modulate light The liquid crystal display 903 may include polarizers, wave plates, such as quarter wave plates or other wave plates, means for compensating for residual birefringence or for problems encountered during off axis viewing, etc. Other types of display devices which modulate light as a function of some type of controlled input can be used in place of the liquid crystal cell 903. Exemplary liquid crystal cells and display devices which may be used for the liquid crystal cell 903 are disclosed in U.S. patents Nos. 4,385,806, 4,436,376, 4,540,243, Re. 32,521, and 4,582,396, which disclose surface mode and pi-cell liquid crystal devices, and in concurrently filed, commonly owned U.S. patent APPLICATION Serial No. 08/187,050, entitled "Folded Variable Birefringent Liquid Crystal Apparatus" (now U.S. Patent No. 5,532,854 mentioned above).

The optics 904 may be one or more lenses separate from and/or included as part of the liquid crystal display for the purpose of providing an output image for viewing or for projection. If for viewing, such optics 904 may be one or more lenses which focus an image for close, e.g., as in a head mounted display of the heads up display type, virtual reality type or multimedia type, or far viewing, e.g., as in a slide viewer or a television. If for projection, such optics 904 may include projection optics which project an image formed by the display 903 onto a screen for transmissive viewing or reflective viewing.

The image signal source 906 may be a source of computer graphics signals, NTSC type television (video) signals, or other signals intended to produce an image on the display 903. Such signals are decoded in conventional manner by the computer control 905, for example, as is the case in many display systems, and in response to such decoding or deciphering, the computer control 905 (or some other appropriate control, circuit, etc.) operates the display 903 to produce desired images. If desired, the computer control 905 can operate the display 903 in sequential manner to produce multiple images in sequence while the display is being illuminated by only a single light source or color of light, e.g., a monochromatic type of operation. Exemplary operation of this type is summarized in the above '396 patent. Other exemplary types of operation of the computer control 905 include those employed in conventional liquid crystal display televisions of the hand-held or larger type and/or liquid crystal type computer monitors. Alternatively, the computer control can operate the display 903 in a field sequential or frame sequential manner whereby a particular image is formed in several parts; while one part is formed, the display is illuminated by light of one color; while another part is formed, the display is illuminated by light of a different color; and so on. Using this field sequential type operation, multicolor images can be produced by the display system apparatus 901.

In a typical input signal to a television or liquid crystal television, there is information indicating brightness of the light to be transmitted (or reflected) at a particular pixel. The computer control 905 is operative to compute the brightness information of a particular image or scene and in response to such computation to control the intensity or brightness of the light source 902. While intensity or brightness of the light source is controlled in this manner, the computer control 905 operates the liquid crystal display 903 to modulate light without having to reduce the number of pixels used to transmit light. Therefore, the full number or a relatively large number of pixels can be used to form the image or scene even if the brightness of the scene as controlled by the controlled light source is relatively dark.

Information coming through from the image signal source 906 may indicate various levels of illumination There usually is a blanking pulse and a data line pulse. The computer control 905 can take the integral of the data line electrically or an integral of the whole set of data (from all of the data lines of the scene) or all of the pixels while electrically skipping the blanking. Based on that integral, the brightness of the light incident on the display 903 is controlled by the computer control 905. It will be appreciated that a person having ordinary skill in the art would be able to prepare an appropriate computer program to provide the integral functions and to use the results of such integration to provide brightness control for the light source 902.

From the foregoing, then, it will be appreciated that the apparatus 901, including the computer control 905, is operative to control or to adjust the brightness of a scene without degrading the contrast ratio. Thus, the same contrast ratio can be maintained while brightness of a scene or image is adjusted. For example, the same contrast ratio or substantially the same contrast ratio can be maintained by the apparatus 901, whether depicting a scene of a bright sunlit environment or of the inside of a dark cave. Therefore, the scene will have the appearance of illumination under natural illumination conditions.

The features of the invention described below can be used in virtually any passive display system.

Power requirements of the apparatus 901 can be reduced over prior display systems because the intensity of light produced by the source 902 is controlled to create dark images. In prior systems, though, the intensity of the light produced by the source was maintained substantially constant while the amount of light permitted to be transmitted through the passive display would be reduced to create a dark scene image.

In addition to controlling intensity of the light source 902 as a function of brightness of a scene, the computer control 905 also may be responsive to measurement or detection of the ambient environment in which the apparatus 901 is located. The brightness of such ambient environment may be detected by the photodetector 907. The photodetector 907 may be place in a room or elsewhere where the image created by the display 903 is to be viewed; and the brightness of the source 902 can be adjusted appropriately. For example, if the room is dark, it usually is desirable to reduce brightness of the source; and if the room is bright or the apparatus is being used in sunlight, the brightness of the source may be increased.

Turning to Fig. 5, a light reflective display system according to the invention is illustrated at 901'. The display system 901' includes a light source 902', liquid crystal display 903', optics 904' for projection or viewing of the images created by the liquid crystal display 903', a computer control 905', and an image signal source 906. A photodetector 907 also may be included in the system 901. The various parts of the display 903' and optics 904' may be the same or similar to those disclosed in the U.S. patent applications and patents referred to above. The light source 902' and display 903' may be of the type disclosed in concurrently filed, commonly owned U.S. patent application Serial No. 08/187,162, entitled "Illumination System For A Display" (now U.S. Patent No. 5,541,745 mentioned above).

For example, the light source 902' may include a source of circularly polarized light 902a' and a cholesteric liquid crystal reflector 908. The liquid crystal display 903' may be a reflective variable birefringence liquid crystal display device.

### Full Color Frame Sequential Illumination System and Display.

Turning to Fig. 6 a full color display subsystem 919 including illumination system 920 is shown. However, in the display subsystem 919 the illumination system 920 includes several sources of light, each having a different wavelength, For example, three separate light sources 902r, 902g, 902b provide red, green and blue wavelength light, respectively, or light that is in respective wavelength bands or ranges that include red, green and blue, respectively. The light sources may be respective light emitting diodes or they may be other sources of red, green and blue light or other respective wavelengths of light, as may be desired for use in the display subsystem 919. The cholesteric liquid crystal reflector 908 is able to reflect green light; the reflector 908a is able to reflect red light; the reflector 908b is able to reflect blue light. Such reflection occurs when the circular polarization characteristic of the light is the same direction as the twist direction of the cholesteric liquid crystal material in the respective reflector. The reflectors 908, 908a, 908b are transparent to the other polarizations of incident light and to the other wavelengths of incident light.

The illumination system 920 is intended sequentially to illuminate the display 903', which may include a wave plate, such as a quartet wave plate, (or respective portions of the display) with respective wavelengths of light. For example, for a period of time the display 903' (or portion thereof) is illuminated with red light; subsequently illumination is by either green or blue light; and still subsequently illumination is by the other of green or blue light. Such sequential illumination may be carried out sufficiently rapidly so that respective red, green and blue images created by the display 903' when illuminated by the respective colors of light are output from the display subsystem 961 and are integrated by the human eye. As a result, the human eye effectively sees a multicolor image. Other examples of frame sequential switching to provide multicolor and/or full color outputs are known in the art. Various advantages inure to a frame sequential multicolor display, including the ability to provide high resolution with approximately one-third the number of picture elements required for a full color r, g, b display system in which respective pixels are red, green or blue.

The sequential delivering of red, green and blue light to the display 903' is coordinated by the control system 905 with the driving of the display 903'. Therefore, when a red image or a portion of a red image is to be produced by the display 903', it is done when red light is incident on the display 903'; and the similar type of operation occurs with respect to green and blue images.

If the respective light sources 902r, 902g, 902b are light emitting diodes, they may be sequentially operated or energized to provide light in coordination with the operation of the display 903' under direct control and/or energization by the control system 905. Alternatively, the control system 905 may be coordinated with whatever other means are used to provide the respective red, green and blue color lights of the light source.

Another example of frame sequential or field sequential operation of a displays subsystem like that shown at 961 herein is described in the above-referenced patent applications. Another example of field sequential operation is described in U.S. patent No. 4,582,396, which is mentioned above and incorporated by reference.

Referring to Fig. 7, a bead mounted display 960 includes a pair of display systems 961, 962 and a control system 705 for creating images intended to be viewed by the eyes 964, 965 of a person. The display systems 961, 962 may be positioned in relatively close proximity, for example, at approximately one inch distance, to the respective eyes 964, 965. A mounting mechanism, such as temple pieces 966, 967 and a nose bridge 968 may be provided to mount the display 960 on the head of the person.

The control system 905 in conjunction with the display systems 961, 962 are intended to create images for viewing by the eyes. Those images may be monochromatic. The images may be multicolor. The images may be two-dimensional or they may provide a three dimensional, stereoscopic effect. Stereoscopic effect viewing is obtained whim the control system 905 operates the display systems 961, 962 to provide, respectively, right eye and left eye images that are sufficiently distinct to provide depth perception. Right eye, left eye imaging and depth perception are techniques used in some stereoscopic imaging and viewing systems which are commercially available.

The display systems 961,962 may be identical. The control system 905 provides control and/or power input to the display systems 961, 962 to create images for display to the eyes 964, 965. The display 960 may be a head mounted display, such as a heads-up display, a virtual reality display, or a multimedia display. The control system 905 may be generally a control system of the type used in known head mounted displays to create such images. Such a control system may provide for control of color, light intensity, image generating, gamma, etc. The display systems 961, 962 may include focusing optics so as to focus the image created by the display systems for comfortable viewing, for example from a few inches up to a few feet in front of the eyes, say, from about 20 inches to about several feet in front of the eyes.

It will be appreciated that the features of the liquid crystal cell 903' may be used in the display 960 of the head mounted type. Also, features of the invention may also be employed in other types of display systems. One example is a display system that uses only a single display system of the type described herein. Such display system may be located in proximity to an eye for direct viewing. Alternatively, such display system may be used as part of a projection type display in which light from the display system is projected onto a surface where the image is formed for viewing. Various lenses and/other optical components may be used to direct from the display system light to create an appropriate image at a desired location.

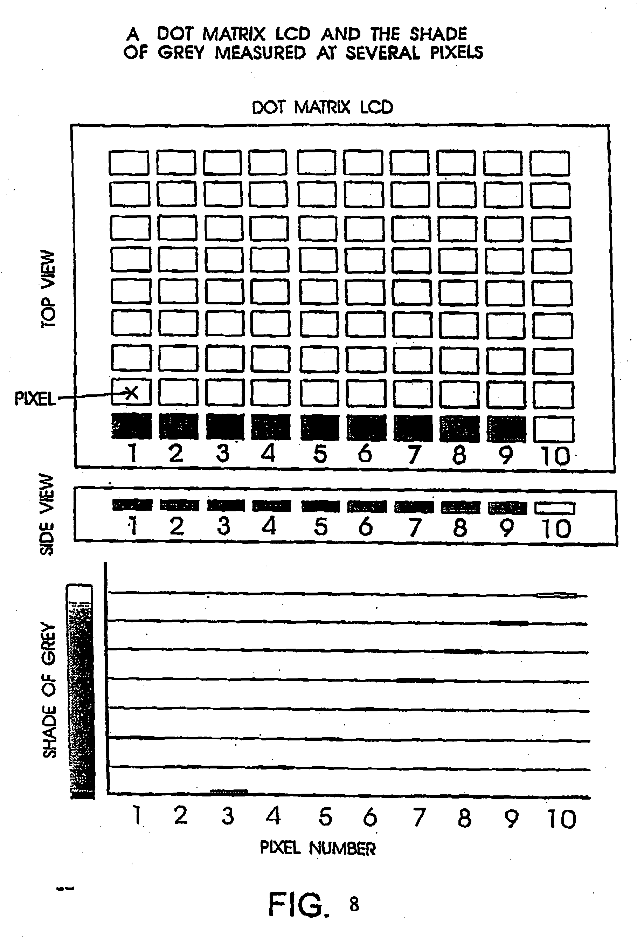

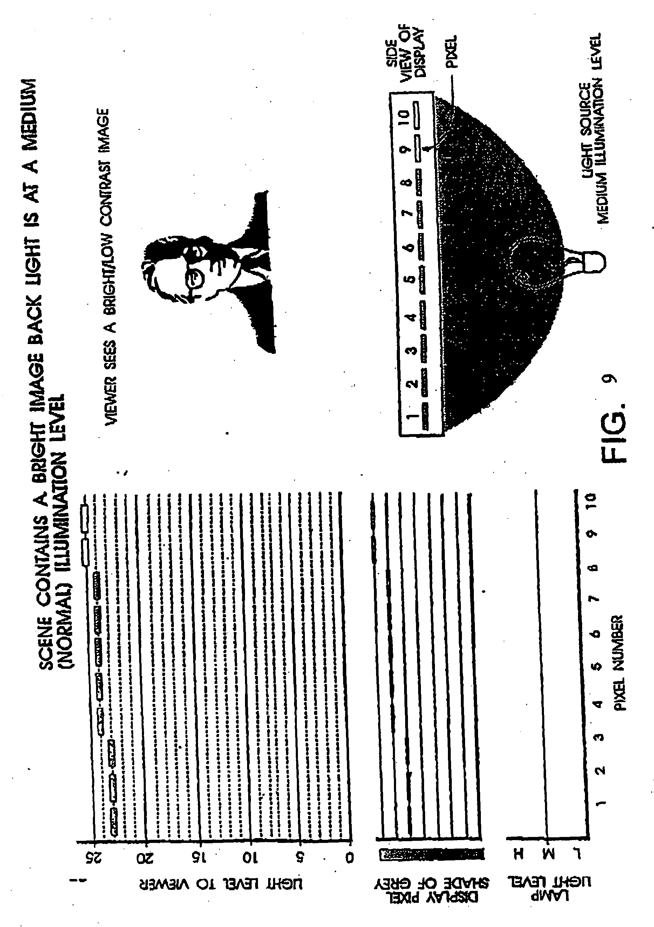

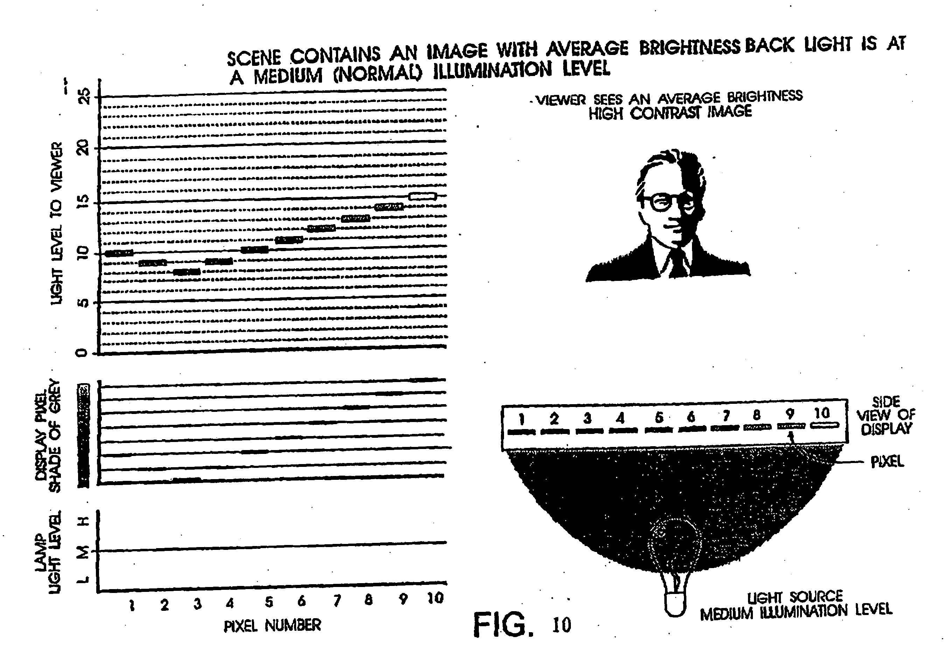

Turning to Figs. 8-13, operation of the apparatus is described. In Fig. 8 a plan view of a dot matrix liquid crystal display is shown. The shade of grey measured at several pixels is indicated. According to the bottom graph in Fig. 8, the actual shade is shown; according to the dot matrix image at the side and top of Fig. 8, the actual shade of the pixel is shown. Thus, at location 1 on the graph at the bottom of Fig. 8, there is a shade 2. At location 2, there is a shaded At location 3 there is a shade 0, and so on. In pixel 1 marked in the top of Fig. 8, the pixel is a shade gray of 2; and at the adjacent pixel the pixel is a shade gray of 1, and so on. This is conventional. This would indicate the signals coming in to the computer control 905. In Fig. 9, an example of a bright image scene produced by back light at a medium (normal) illumination level is illustrated at the top; the shades of gray are shown at the middle left; and the lamp light level is constant at the bottom left. The viewer sees a bright/low contrast image of a person as seen at the top right of the drawing. A side view of the display representing respective pixels and the tray levels thereof is shown at the bottom right of the figure.

Fig, 10 is similar to Fig. 9. again with average constant lamp light level. The average light level is produced; the average brightness output from the display is to be produced; and the viewer sees an average brightness high contrast image because all conditions are optimized.

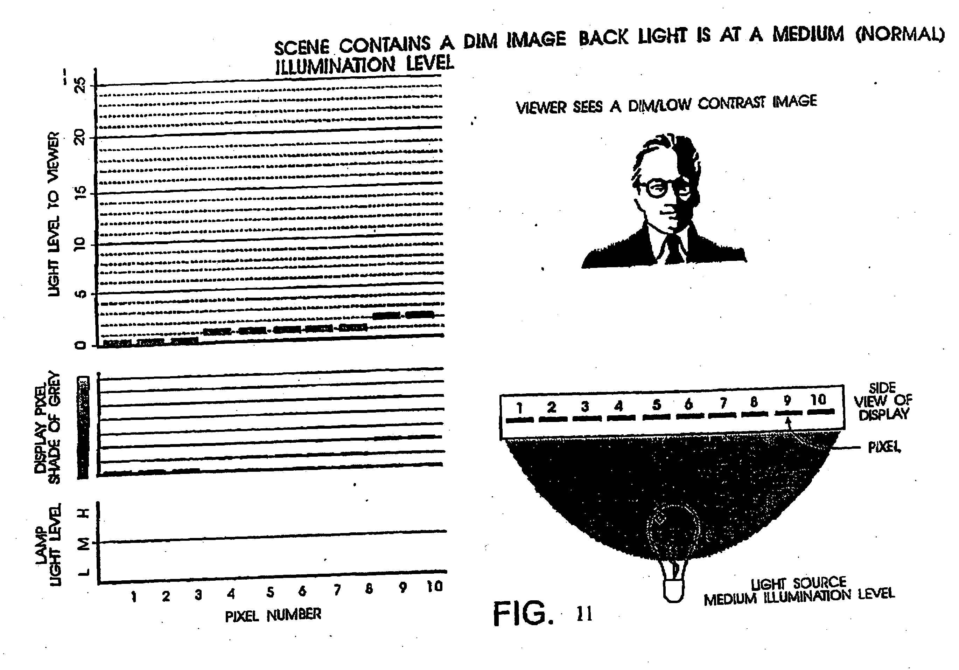

Fig.11 is similar to Fig. 9 again with average constant lamp light level and a dark transmission provided by the liquid crystal cell: the viewer sees a dim low contrast image.

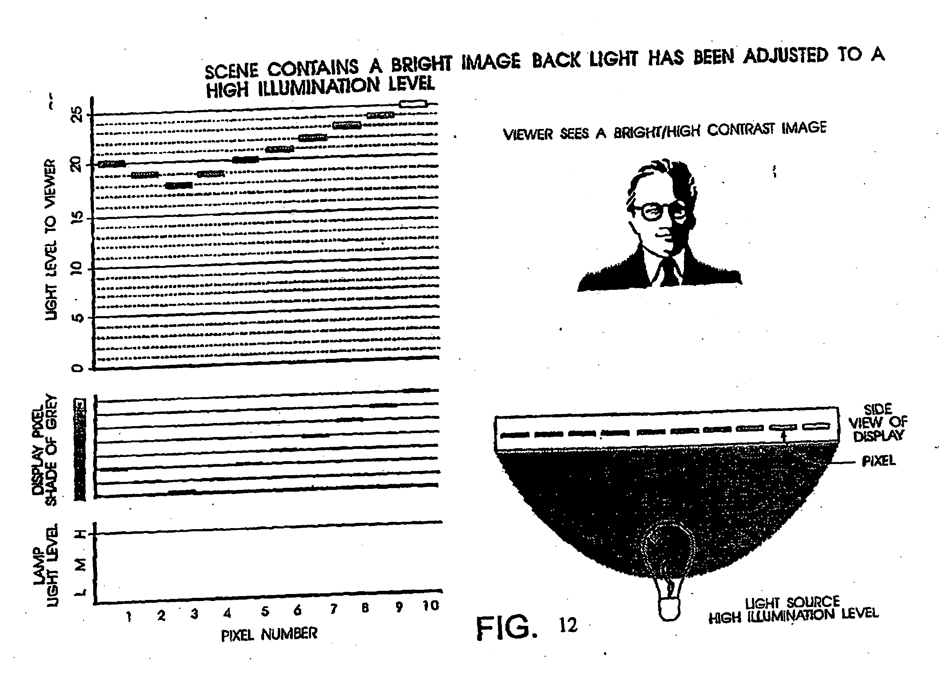

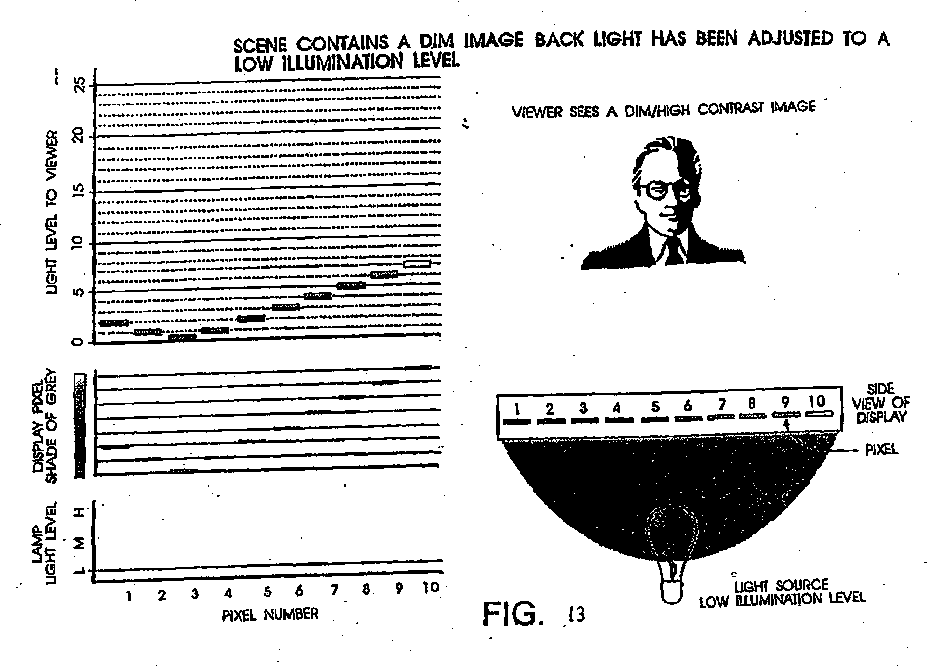

Figs. 9-11 represent operation of a standard display apparatus. Figs. 12 and 13 represent applying the principles of the present invention to develop high contrast images. In Fig. 12 it is seen that there is the intent to produce a wide range of gray levels; and this is possible by using a high intensity lamp level; the result is a bright high contrast image. In Fig, 13 it is intended that the viewer see a dim image; the same range of grey shades are provided as is depicted in the middle left graph of the drawing; but the lamp level is low. Therefore, there is a good contrast ratio provide to the viewer; from 0 to about 7 at the brightness level shown in the graph at the upper left of the drawing.

## Claims

1. A method of controlling contrast of a display image of a display apparatus capable of displaying color within a predetermined grey range having a predetermined number of discrete shades of grey, the display apparatus including an illuminating light source and a computer control, the method comprising:
processing brightness information and color information of the input image signal;
wherein if an input image signal uses a first number of discrete shades of grey that is less than the predetermined number of discrete shades of grey of the display apparatus in a range less than the predetermined grey range,
the first number of discrete shades of grey is changed to a second number of discrete shades of grey greater than the first number of discrete shades of grey while adjusting the amount of light from the illuminating light source, wherein the adjusting comprises:
decreasing the amount of light if the image corresponding to the input signal is a dim image; and
increasing the amount of light if the image corresponding to the input signal is a bright image.

2. The method of claim 1 for displaying a color image, further comprising:
providing light from the illuminating light source having at least three colors to illuminate the display apparatus to display an image.

3. The method of claim 1 for displaying a color image, further comprising:
providing light from the illuminating light source having at least three independently controllable colors to illuminate the display apparatus to display an image; and
wherein the processing brightness information and color information and determining shades of grey is carried out for each color used for the input image signal; and
said changing while adjusting comprising independently by color increasing the number of shades of grey used to display an image corresponding to the input image signal while independently by color decreasing the amount of light if the image corresponding to the input image signal is a relatively dim image and independently by color increasing the amount of light if the image corresponding to the input image signal is a relatively bright image.

4. The method of any of claims 1-3, further comprising displaying the image.

5. A display device for displaying an image, comprising:
a display apparatus capable of displaying color within a predetermined grey range having a predetermined number of discrete shades of grey;
an illuminating light source;
a computer control, wherein the computer control is operable to receive an input signal including brightness and color information using a first number of discrete shades of grey that is less than the predetermined number of discrete shades of grey of the display apparatus in a range that is less than the predetermined grey range; change the first number of discrete shades of grey to a second number of discrete shades of grey used to display an image on the display while adjusting an amount of light from the illuminating light source by increasing an amount of light from the illuminating light source if the brightness is high and decreasing an amount of light from the illuminating light source if the brightness is low.

6. The display of claim 5, wherein
the illuminating light source comprises a plurality of light sources of different colors,

7. The display device of any of claims 5-6, wherein the illuminating light source comprises a plurality of light sources of different colors where each color can be independently controlled.

8. The display device of either of claims 6 or 7, wherein the shades of grey for each respective color of the plurality of light sources is determined for the image and the shades of grey for each of the color components is independently increased for the display and decreasing or increasing the relative brightness of each of the component colors in the illuminating light source if the relative brightness of the component is dim or bright relative to the other component colors in the input image.

9. The display device of any of claims 6-8, wherein the light sources are light emitting diodes.

## Patentansprüche

1. Verfahren zum Steuern des Kontrastes eines Anzeigebildes einer Anzeigevorrichtung mit der Fähigkeit, die Farbe in einem vorbestimmten Graubereich anzuzeigen mit einer vorbestimmten Anzahl diskreter Grauabstufungen, wobei die Anzeigevorrichtung eine Beleuchtungslichtquelle und eine Computersteuerung einschließt und das Verfahren aufweist:
Verarbeiten der Heiligkeitsinformation und Farbinformation des Eingangsbildsignals;
wobei wenn ein Eingangsbildsignal eine erste Anzahl diskreter Grauabstufungen verwendet, welche kleiner ist als die vorbestimmte Anzahl diskreter Grauabstufungen der Anzeigevorrichtung in einem Bereich kleiner als der vorbestimmte Graubereich,
die erste Anzahl diskreter Grauabstufungen zu einer zweiten Anzahl diskreter Grauabstufungen verändert wird, die größer ist als die erste Anzahl diskreter Grauabstufungen, während die Menge an Licht aus der Beleuchtungslichtquelle eingestellt wird, wobei das Einstellen aufweist:
Verringern der Lichtmenge, wenn das dem Eingangssignal entsprechende Bild ein dunkles Bild ist; und
Erhöhen der Lichtmenge, wenn das dem Eingangssignal entsprechende Bild ein helles Bild ist.

2. Verfahren nach Anspruch 1 zur Anzeige eines Farbbildes, ferner mit:
dem Vorsehen von Licht aus der Beleuchtungslichtquelle mit mindestens drei Farben, um die Anzeigevorrichtung zur Anzeige eines Bildes zu beleuchten.

3. Verfahren nach Anspruch 1 für die Anzeige eines Farbbildes, ferner mit:
Vorsehen von Licht aus der Beleuchtungslichtquelle mit mindestens drei unabhängig steuerbaren Farben, um die Anzeigevorrichtung zu beleuchten, um ein Bild anzuzeigen; und
wobei die Verarbeitung der Helligkeitsinformation und Farbinformation und Bestimmung der Grauabstufungen für jede für das Eingangsbildsignal verwendete Farbe ausgeführt wird; und
das Verändern während des Einstellens unabhängig von der Farbe das Erhöhen der Anzahl von Grauabstufungen, die benutzt werden, um ein dem Eingangsbildsignal entsprechendes Bild anzuzeigen, während unabhängig von der Farbe ein Verringern der Lichtmenge aufweist, wenn das dem Eingangsbildsignal entsprechende Bild ein relativ dunkles Bild ist, und unabhängig von der Farbe die Erhöhung der Lichtmenge aufweist, wenn das dem Eingangsbildsignal entsprechende Bild ein relativ helles Bild ist.

4. Verfahren nach einem der Ansprüche 1 bis 3, ferner mit dem Anzeigen des Bildes.

5. Anzeigevorrichtung für die Anzeige eines Bildes mit:
einer Anzeigevorrichtung mit der Fähigkeit, eine Farbe in einem vorbestimmten Graubereich anzuzeigen, der eine vorbestimmte Anzahl diskreter Grauabstufungen hat;
einer Beleuchtungslichtquelle;
einer Computersteuerung, die im Betrieb ein Eingangssignal aufnimmt mit Helligkeits-und Farbinformation unter Verwendung einer ersten Anzahl diskreter Grauabstufungen, die kleiner ist als die vorbestimmte Anzahl diskreter Grauabstufungen der Anzeigevorrichtung in einem Bereich, der kleiner ist als der vorbestimmte Graubereich; die erste Anzahl diskreter Grauabstufungen zu einer zweiten Anzahl diskreter Grauabstufungen verändert, die verwendet werden, um ein Bild auf dem Bildschirm anzuzeigen, während eine Menge an Licht aus der Beleuchtungslichtquelle durch Erhöhen einer Menge an Licht aus der Beleuchtungslichtquelle, wenn die Helligkeit hoch ist, und Erniedrigen einer Menge an Licht aus der Beleuchtungslichtquelle, wenn die Helligkeit niedrig ist, eingestellt wird.

6. Anzeige nach Anspruch 5, wobei
die Beleuchtungslichtquelle eine Vielzahl von Lichtquellen unterschiedlicher Farben aufweist.

7. Anzeigevorrichtung nach einem der Ansprüche 5-6, wobei die Beleuchtungslichtquelle eine Vielzahl von Lichtquellen unterschiedlicher Farben aufweist, wobei jede Farbe unabhängig gesteuert werden kann.

8. Anzeigevorrichtung nach Anspruch 6 oder 7, wobei die Grauabstufungen für jede entsprechende Farbe der Vielzahl von Lichtquellen für das Bild bestimmt werden und die Grauabstufungen für jede der Farbkomponenten für den Bildschirm unabhängig erhöht werden, bei Verringerung oder Erhöhung der relativen Helligkeit jeder der Komponentenfarben in der Beleuchtungslichtquelle, wenn die relative Helligkeit der Komponente relativ zu den anderen Komponentenfarben in dem Eingangsbild dunkel oder hell ist.

9. Anzeigevorrichtung nach einem der Ansprüche 6-8, wobei die Lichtquellen Leuchtdioden sind.

## Revendications

1. Procédé pour commander le contraste d'une image d'affichage d'un dispositif d'affichage susceptible d'afficher une couleur à l'intérieur d'une plage de gris prédéterminée ayant un nombre prédéterminé d'ombres discrètes de gris, le dispositif d'affichage comprenant une source de lumière d'éclairage et une commande informatisée, le procédé comprenant :
le traitement d'une information de luminosité et d'une information de couleur du signal d'image d'entrée ;
dans lequel, si un signal d'image d'entrée utilise un premier nombre d'ombres discrètes de gris qui est inférieur au nombre prédéterminé d'ombres discrètes de gris du dispositif d'affichage dans une plage plus petite que la plage de gris prédéterminée,
le premier nombre d'ombres discrètes de gris est changé en un deuxième nombre d'ombres discrètes de gris supérieur au premier nombre d'ombres discrètes de gris tout en ajustant la quantité de lumière venant de la source d'éclairage, l'ajustement comprenant :
la diminution de la quantité de lumière si l'image correspondant au signal d'entrée est une image peu lumineuse ; et
l'augmentation de la quantité de lumière si l'image correspondant au signal d'entrée est une image lumineuse.

2. Procédé selon la revendication 1 pour afficher une image en couleurs, comprenant de plus :
la délivrance de lumière à partir de la source d'éclairage, ayant au moins trois couleurs, pour éclairer le dispositif d'affichage afin d'afficher une image.

3. Procédé selon la revendication 1 pour afficher une image en couleurs, comprenant de plus :
la délivrance de lumière à partir de la source d'éclairage, ayant au moins trois couleurs pouvant être commandées indépendamment, pour éclairer le dispositif d'affichage afin d'afficher une image ; et
dans lequel le traitement de l'information de luminosité et de l'information de couleur et la détermination d'ombres de gris sont effectués pour chaque couleur utilisée pour le signal d'image d'entrée ; et
ledit changement pendant l'ajustement comprend l'augmentation de façon indépendante par couleur du nombre d'ombres de gris utilisées pour afficher une image correspondant au signal d'image d'entrée tout en diminuant de façon indépendante par couleur la quantité de lumière si l'image correspondant au signal d'image d'entrée est une image relativement peu lumineuse et en augmentant de façon indépendante par couleur la quantité de lumière si l'image correspondant au signal d'image d'entrée est une image relativement lumineuse.

4. Procédé selon l'une quelconque des revendications 1 à 3, comprenant de plus l'affichage de l'image.

5. Dispositif d'affichage pour afficher une image, comprenant :
un dispositif d'affichage susceptible d'afficher une couleur à l'intérieur d'une plage de gris prédéterminée ayant un nombre prédéterminé d'ombres discrètes de gris ;
une source de lumière d'éclairage ;
une commande informatisée, la commande informatisée pouvant fonctionner de façon à recevoir un signal d'entrée comprenant une information de luminosité et de couleur utilisant un premier nombre d'ombres discrètes de gris qui est inférieur au nombre prédéterminé d'ombres discrètes de gris du dispositif d'affichage dans une plage qui est plus petite que la plage de gris prédéterminée ; changer le premier nombre d'ombres discrètes de gris en un deuxième nombre d'ombres discrètes de gris utilisées pour afficher une image sur l'afficheur tout en ajustant une quantité de lumière venant de la source de lumière d'éclairage par l'augmentation d'une quantité de lumière venant de la source de lumière d'éclairage si la luminosité est élevée et par la diminution d'une quantité de lumière venant de la source de lumière d'éclairage si la luminosité est faible.

6. Afficheur selon la revendication 5, dans lequel :
la source de lumière d'éclairage comprend une pluralité de sources de lumière de couleurs différentes.

7. Dispositif d'affichage selon l'une quelconque des revendications 5 à 6, dans lequel la source de lumière d'éclairage comprend une pluralité de sources de lumière de couleurs différentes, chaque couleur pouvant être commandée de façon indépendante.

8. Dispositif d'affichage selon l'une ou l'autre des revendications 6 ou 7, dans lequel les ombres de gris pour chaque couleur respective de la pluralité de sources de lumière sont déterminées pour l'image, et les ombres de gris pour chacune des composantes de couleur sont augmentées de façon indépendante pour l'affichage, et l'on diminue ou l'on augmente la luminosité relative de chacune des composantes de couleur dans la source de lumière d'éclairage si la luminosité relative de la composante est peu lumineuse ou lumineuse par rapport aux autres composantes de couleur dans l'image d'entrée.

9. Dispositif d'affichage selon l'une quelconque des revendications 6 à 8, dans lequel les sources de lumière sont des diodes électroluminescentes.
